# EUROPEAN PATENT SPECIFICATION

(11) **EP 0 457 411 B1**
(45) Date of publication and mention of the grant of the patent: **15.11.1995**
(21) Application number: 91201175.6
(22) Date of filing: 15.05.1991
(51) Int. Cl.: B03B 11/00, B01D 21/24, B03B 5/00

(54) **Method and device for separating a light material fraction from a heavy material fraction from a mixture of the two fractions of solid materials**
Verfahren und Vorrichtung zum Trennen einer leichten Materialfraktion von einer schweren Materialfraktion aus einer Mischung der beiden Feststofffraktionen
Méthode et dispositif pour la séparation d'une fraction de matériaux légers d'une fraction de matériaux lourds à partir du mélange desdites fractions de matériaux solides

(30) Priority: 16.05.1990 NL 9001141
(43) Date of publication of application: 21.11.1991
(73) Proprietor: Heijmans Materieel Beheer B.V., NL-5248 JR Rosmalen (NL)
(72) Inventor: Bosch, Bertholdus Petrus, 5258 HG Berlicum (NL)
(74) Representative: Van kan, Johan Joseph Hubert, Ir.

(56) References cited:
- DE-A- 3 034 451
- FR-A- 568 492
- FR-A- 2 513 904
- NL-A- 7 601 930

## Description

The invention relates to a method and device for separating a light material fraction from a heavy material fraction from a mixture of the two fractions of solid materials, whereby said mixture is introduced into a liquid bath, in which the heavy fraction is allowed to settle, whilst the light fraction is discharged at the upper side of the bath along with an outflowing liquid, whereby near the upper side of the bath the mixture is evenly supplied in a direction at least substantially parallel to the liquid surface of the bath, and that the light fraction is discharged in a point which is located at least substantially directly opposite the supply point of the material into the bath.

Such a method and device for performing said method is known from FR-A-568,492. Thereby the material fractions to be separated are flushed into the upper end of the liquid bath together with a flow of liquid. When small differences occur in the specific weights of the fractions to be separated the light material fraction may be carried along under the liquid surface with the heavy material fraction.

According to the invention liquid is supplied into the bath at the lower end of the bath so that during operation there is an upward flow of liquid in the bath and the materials are introduced into an inclined vibrating gutter-shaped means which is in open communication with the bath, the lower end of said gutter-shaped means connected to the bath being located under the liquid level.

Light material fractions will move upwards along with the liquid flowing upwards in the bath, towards the surface of the bath or stay at the surface, so as to be discharged there.

The material is thereby introduced into a vibrating gutter-shaped means which is in open communication with the bath, the lower end of said means connecting to the bath being located at least partly under the liquid level. The result of this is that the material is already present in the liquid before it gets a chance to move downwards into the bath very far.

According to a further aspect of the invention a decive for carrying out the method, which is provided with a liquid-containing reservoir having an outlet provided near the upper side of the reservoir, comprises the features as described in claim 2.

The invention will be explained in further detail hereinafter, with reference to an embodiment of a device according to the invention diagrammatically illustrated in the accompanying figures.

Figure 1 is a diagrammatic elevational view of an embodiment of the device according to the invention.

Figure 2 is side elevational view of figure 1, wherein for easy reference certain parts of the device have been left out.

The device is provided with a vertical reservoir or vat 1, said reservoir preferably having a circular of oval section. The bottom end of the reservoir 1 connects to an upwardly sloping tubular housing 2 accommodating a conveying means formed by an endless conveyor belt 3 in the illustrated embodiment. On the bottom end of the tubular housing 2 there is provided a connection 4 for supplying a liquid, e.g. water, as indicated by means of the arrows A.

The end of the conveyor belt 3 projecting form the tubular housing 2 is located above a diagrammatically indicated hopper or further conveying means 2'.

A connecting pipe 5 is mounted on the upper end of the reservoir 1, said connecting pipe being connected, via a flexible connecting piece 6, to a vibrating trough 7, which can be set vibrating during operation by means of a vibrating device 8. Diametrically opposite the connecting pipe 5 a discharge chute 9 is connected to the upper end of the reservoir 1. The open end of said discharge chute 9 is located above a screening sieve plate 11 provided in a hopper 10. Said screening sieve plate 11 can be set vibrating by means of a vibrating device 12. The end of the screening sieve plate remote from the discharge chute 9 is located above a further discharge chute 13.

During operation the reservoir 1 and the tubular housing 2 being in open communication with the lower end of the reservoir will be filled with a liquid, usually water, whereby the vertical position of the water surface 14 is determined by the lower edge of the discharge chute 9.

The vibrating trough 7 includes a very small angle of only ± 10^{o} with the horizontal. The vibrating trough with the connecting pipe 5 being in line with the vibrating trough 7 is thereby provided in such a manner that the end of the vibrating trough 7 formed by the connecting pipe 5 and connecting to the reservoir 1 is located lower than the water surface 14, so that also the lower part of the end of the vibrating trough connecting to the reservoir 1 is under water.

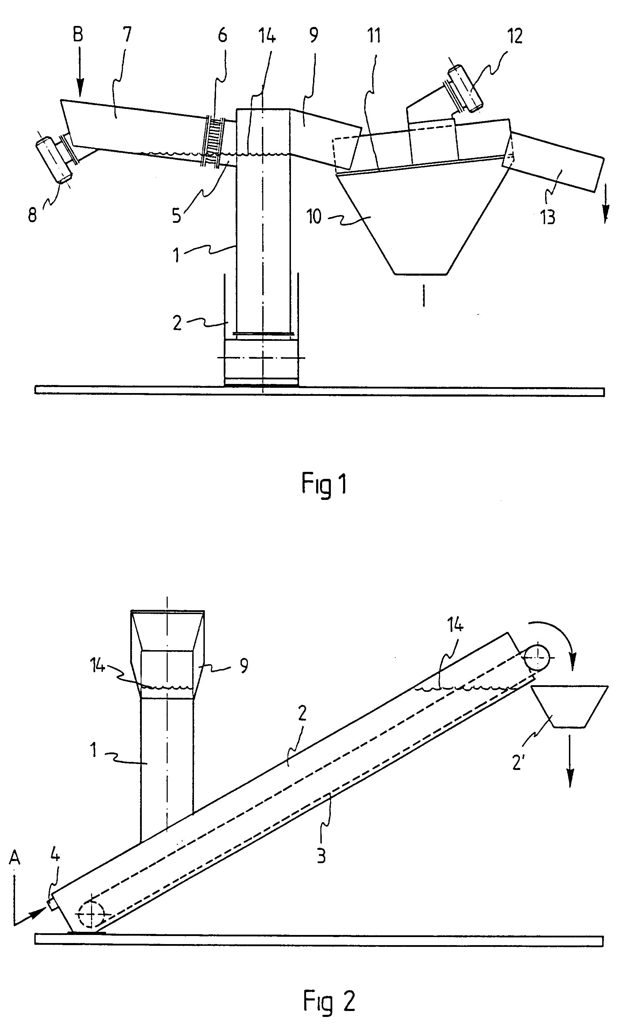

The material mixture of light and heavy fractions to be separated is supplied at the left-hand end, when seen in Figure 1, of the vibrating trough 7, as indicated by means of the arrow B. When the vibrating trough is set vibrating the material introduced into the vibrating trough will gradually be moved in the direction of the reservoir 1, and already slide into the water when still present in the vibrating trough, and then move into the water bath present in the reservoir 1. It will be apparent that in this manner the material is introduced into the water in more or less horizontal direction, i.e. at an angle of less than 15^{o} with the horizontal. As a result of this it is prevented that in particular the lighter material fraction has a significant vertical component of movement when being introduced into the upper part of the water bath present in the reservoir 1. The light material will thus move more or less horizontally from the vibrating trough 7 in the direction of the discharge chute 9, so as to exit along with the water at that location. The water flows through the sieve 11, to be caught and be returned to the connecting stub 4 and to flow upwards through the reservoir 1 again. The light fraction remaining behind on the sieve 11 moves across the vibrating sieve 12 in the direction of the discharge chute 13.

The heavier material will settle in the reservoir 1, so as to be subsequently discharged by means of the conveyor 3.

Although a belt conveyor is illustrated in the present embodiment, it will be apparent that it is also possible to use another conveying means, e.g. a screw conveyor or the like.

## Claims

1. A method for separating a light material fraction from a heavy material fraction from a mixture of the two fractions of solid materials, whereby said mixture is introduced into a liquid bath (1), in which the heavy fraction is allowed to settle, whilst the light fraction is discharged at the upper side of the bath along with an outflowing liquid, whereby near the upper side of the bath (1) the mixture is evenly supplied in a direction at least substantially parallel to the liquid surface of the bath, whilst the light fraction is discharged in a point which is located at least substantially directly opposite the supply point of the material into the bath, characterised in that liquid is supplied into the bath at the lower end of the bath (1) so that during operation there is an upward flow of liquid in the bath and the materials are introduced into an inclined vibrating gutter-shaped means (7), which is in open communication with the bath (1), the lower end of said gutter-shaped means connected to the bath being located under the liquid level (14).

2. A decive for carrying out the method according to claim 1, said device being provided with a liquid-containing reservoir (1) having an outlet near the upper side of the reservoir, characterised in that an inclined feed chute (7) for supplying a mixture to be separated has been connected to the upper side of the reservoir (1) and a liquid supply line (4) is in communication with the lower end of the reservoir, the arrangement being such that the lower boundary edge of the feed chute (7) is located lower than a lower boundary edge of a discharge chute (9) connected to the upper end of the reservoir.

3. A device according to claim 2, characterised in that said discharge chute (7) is a vibrating trough.

4. A device according to claim 2 or 3, characterised in that the feed chute (7) and the discharge chute (9) are provided at least substantially directly opposite one another.

5. A device according to any one of the claims 2-4, characterised in that at least near its upper end the reservoir (1) has a circular or oval section.

6. A device according to any one of the claims 2-5, characterised in that at its bottom end the reservoir (1) connects to a tubular housing (2) sloping upwards from the bottom end of the reservoir (1), said housing (2) accommodating a conveying means (3), whilst the upper mouth of said housing (2) is disposed at a level above the lower boundary edge of the discharge chute (9) connecting to the upper end of the reservoir (1).

## Patentansprüche

1. Verfahren zur Trennung einer leichten Materialfraktion von einer schweren Materialfraktion aus einer Mischung der beiden Feststofffraktionen, wobei die Mischung in ein Flüssigkeitsbad (1) eingebracht wird, in welchem sich die schwere Fraktion absetzen kann, während die leichte Fraktion an der Oberseite des Bades zusammen mit einer ausfließenden Flüssigkeit abgegeben wird, wobei in der Nähe der Oberseite des Bades (1) die Mischung gleichmäßig in einer zur Flüssigkeitsoberfläche des Bades im wesentlichen parallelen Richtung zugeführt wird, während die leichte Fraktion an einem Punkt abgegeben wird, welcher sich zumindest im wesentlichen direkt gegenüber von dem Zuführungspunkt des Materials in das Bad befindet, dadurch gekennzeichnet, daß am unteren Ende des Bades (1) dem Bad Flüssigkeit zugeführt wird, so daß während des Betriebs in dem Bad Flüssigkeit nach oben fließt und die Materialien in ein geneigtes vibrierendes rinnenförmiges Element (7) eingebracht werden, welches mit dem Bad (1) in offener Verbindung steht, wobei sich das untere Ende des rinnenförmigen Elements, das mit dem Bad in Verbindung steht, unter dem Flüssigkeitsspiegel (14) befindet.

2. Vorrichtung zur Ausführung des Verfahrens gemäß Anspruch 1, wobei die Vorrichtung mit einem Flüssigkeit enthaltenden Reservoir (1) mit einem Auslaß in der Nähe der Oberseite des Reservoirs versehen ist, dadurch gekennzeichnet, daß eine geneigte Zuführrinne (7) zum Zuführen einer zu trennenden Mischung mit der Oberseite des Reservoirs (1) verbunden wurde und eine Flüssigkeitszuführleitung (4) mit dem unteren Ende des Reservoirs in Verbindung steht, wobei die Anordnung so ausgeführt ist, daß die untere Grenzkante der Zuführrinne (7) niedriger als eine untere Grenzkante einer Auslaßrinne (9) angeordnet ist, welche mit dem oberen Ende des Reservoirs verbunden ist.

3. Vorrichtung gemäß Anspruch 2, dadurch gekennzeichnet, daß es sich bei der Zuführrinne (7) um eine Schwingrinne handelt.

4. Vorrichtung gemäß Anspruch 2 oder 3, dadurch gekennzeichnet, daß die Zuführrinne (7) und die Auslaßrinne (9) zumindest im wesentlichen einander direkt gegenüberliegend angeordnet sind.

5. Vorrichtung gemäß einem der Ansprüche 2 - 4, dadurch gekennzeichnet, daß das Reservoir (1) zumindest in der Nähe seines oberen Endes einen runden oder ovalen Schnitt aufweist.

6. Vorrichtung gemäß einem der Ansprüche 2 - 5, dadurch gekennzeichnet, daß sich das Reservoir (1) an seinem unteren Ende an ein röhrenförmiges Gehäuse (2) anschließt, welches ausgehend von dem unteren Ende des Reservoirs (1) schräg nach oben verläuft, wobei das Gehäuse (2) ein Fördermittel (3) aufnimmt, während die obere Öffnung des Gehäuses (2) in einer Höhe über der unteren Grenzkante der Auslaßrinne (9) angeordnet ist, welche sich an das obere Ende des Reservoirs (1) anschließt.

## Revendications

1. Un procédé pour la séparation d'une fraction de matériaux légers d'une fraction de matériaux lourds à partir d'un mélange de deux fractions de matériaux solides, par lequel ledit mélange est introduit dans un bain liquide (1) où on laisse la fraction lourde se déposer, tandis que la fraction légère est évacuée au niveau du côté supérieur du bain en même temps que le liquide qui s'écoule, par lequel, près du côté supérieur du bain (1), le mélange est amené de manière régulière dans une direction au moins sensiblement parallèle à la surface du liquide du bain, alors que la fraction légère est évacuée en un point qui est placé au moins sensiblement directement à l'opposé du point d'amenée de la matière dans le bain, caractérisé en ce que du liquide est amené dans le bain à l'extrémité inférieure du bain (1), de sorte que, en cours de fonctionnement, il existe un écoulement ascendant du liquide dans le bain et que les matériaux sont introduits dans des moyens vibrants (7) en forme de gouttières inclinées qui sont en communication ouverte avec le bain (1), l'extrémité inférieure desdits moyens en forme de gouttière et qui sont reliés au bain étant placée sous le niveau (14) du liquide.

2. Un dispositif pour mettre en oeuvre le procédé selon la revendication 1, ce dispositif étant muni d'un réservoir de contenu de liquide (1) présentant une sortie près du côté supérieur du réservoir, caractérisé en ce qu'une goulotte d'alimentation inclinée (7) pour amener un mélange à séparer a été reliée au côté supérieur du réservoir (1) et qu'une canalisation d'amenée de liquide (4) est en communication avec l'extrémité inférieure du réservoir, la disposition étant telle que le bord limite inférieur de la goulotte d'alimentation (7) est placé plus bas qu'un bord limite inférieur d'une goulotte d'évacuation (9) relié à l'extrémité supérieure du réservoir.

3. Un dispositif selon la revendication 2, caractérisé en ce que ladite goulotte d'évacuation (9) est un bac vibrant.

4. Un dispositif selon la revendication 2 ou 3, caractérisé en ce que la goulotte d'alimentation (7) et la goulotte de d'évacuation (9) sont prévues au moins sensiblement de manière directement opposée l'une à l'autre.

5. Un dispositif selon une quelconque des revendications 2 à 4, caractérisé en ce qu'au moins près de son extrémité supérieure, le réservoir (1) présente une section circulaire ou ovale.

6. Un dispositif selon une quelconque des revendications 2 à 5, caractérisé en ce qu'à son extrémité inférieure, le réservoir (1) est relié à un boîtier tubulaire (2) incliné vers le haut à partir de l'extrémité inférieure du réservoir (1), ledit boîtier (2) logeant un moyen de transport (3), alors que l'embouchure supérieure dudit boîtier (2) est disposée à un niveau supérieur au bord limite inférieur de la goulotte d'évacuation (9) se reliant à l'extrémité supérieure du réservoir (1).
